**Europäisches Patentamt**

**European Patent Office**

**Office européen des brevets**

(19)

(11) Veröffentlichungsnummer : **0 065 642**
**B1**

(12) **EUROPÄISCHE PATENTSCHRIFT**

(45) Veröffentlichungstag der Patentschrift : 07.08.85

(51) Int. Cl.⁴ : **F 16 J   1/16**

(21) Anmeldenummer : **82103242.2**

(22) Anmeldetag : **17.04.82**

(54) Kolbenbolzenlagerung für einen Leichtmetallkolben von Verbrennungsmotoren.

(30) Priorität : 26.05.81 DE 3120842

(43) Veröffentlichungstag der Anmeldung :
01.12.82 Patentblatt 82/48

(45) Bekanntmachung des Hinweises auf die Patenterteilung : 07.08.85 Patentblatt 85/32

(84) Benannte Vertragsstaaten :
DE FR GB IT

(56) Entgegenhaltungen :
US-A- 2 387 344
US-A- 2 387 634
US-A- 2 566 080

(73) Patentinhaber : **MAHLE GMBH**
**Patentabteilung Pragstrasse 26-46**
**D-7000 Stuttgart 50 (DE)**

(72) Erfinder : **Dallef, Jürgen, Dipl.-Ing.**
**Oberdorfstrasse 47**
**D-7022 Leinfelden-Echterdingen 3 (DE)**

(74) Vertreter : **Pfusch, Volker, Dipl.-Ing.**
**MAHLE GMBH, Patentabteilung Pragstrasse 26-46**
**D-7000 Stuttgart 50 (DE)**

EP 0 065 642 B1

## Beschreibung

Bei der Lagerung eines Kolbenbolzens in der Nabenbohrung eines Leichtmetallkolbens sind bei hochbelasteten Motoren besondere Maßnahmen zu ergreifen, um die Ausbildung von Rissen in der Nabenbohrung im Motorbetrieb zu vermeiden. Die kritischen Nabenrisse treten in der Regel im Zenitbereich der Nabenbohrung auf. Die Ursache für diese Nabenrisse sind Zug-Umfangsspannungen in diesem Bereicher Nabenbohrungen. Für deren Entstehen gibt es verschiedene Hypothesen. Bei allen diesen Hypothesen spielt die unter Last erfolgende Durchbiegung des Kolbenbolzens und die unter Last ebenfalls einsetzende Ovalisierung des Kolbenbolzens eine wesentliche Rolle. Zur Neutralisierung dieser beiden als Hauptursache für die Nabenrisse angesehenen Störfaktoren wurde im Stand der Technik unter anderem vorgeschlagen, in dem zum Kolbeninneren liegenden Bereich der Nabenbohrungen, in dem die Nabenrisse zuerst auftreten, zwischen Nabenbohrung und Kolbenbolzen einen sich erst im Lastzustand schlqießenden Spalt vorzusehen. Dieser Spalt kann durch Aufweitung der Nabenbohrung .in diesem Bereich oder auch durch eine in diesem Bereich vorgesehene Einschnürung im Kolbenbolzen oder durch Summierung dieser beiden Maßnahmen erreicht werden. Im einzelnen sind diese Maßnahmen z. B. in der US-PS 2,387,634 und der DE-AS 26 15212 beschrieben.

Andere Maßnahmen bestehen darin, die Bolzennabe von vornherein derart oval zu formen, daß diese Form der sich im Motorbetrieb einstellenden Ovalform des Kolbenbolzens angepaßt ist. Zur Berücksichtigung der Ovalverformung des Kolbenbolzens unter Last wurden darüberhinaus auch sogenannte Taschen in den Seitenwandungen der Nabenbohrung vorgesehen. Derartige Maßnahmen sind z. B. bekannt aus DE-AS 21 52 462, DE-OS 22 03 847 und US-PS 2,990,226.

Aus DE-PS 13 01 677 ist es bei einem mit einem geschlossenen Kühlkanal im Bodenbereich versehenen Kolben noch bekannt, das Öl durch einen mehrteiligen Bolzen und die Kontaktfläche zwischen Bolzenaußenfläche und Nabenbohrung hindurch in den Kühlkanal zu führen. Im Bereich der Nabenbohrungen ist der Bolzen durch außen aufgeschrumpfte Ringe, deren Außenflächen jeweils in der Nabenbohrung anliegen, verstärkt. Durch die Verstärkungs-Ringe hindurch wird über senkrecht zur Bolzenachse verlaufende Bohrungen das Kühlöl in den Kühlkanal geleitet. Nachteilig sind hierbei die auf den Rohrbolzen aufgeschrumpfte Ringe, da diese einen großen Nabenbohrungsdurchmesser bedingen, der häufig aus Platzgründen nicht zur Verfügung steht. Außerdem setzt eine solche Ausführung eine Ölhühlung mittels eines Kühlkanals voraus, was nicht immer gegeben ist. Bei großen Nabenbohrungsdurchmessern ist die Gefahr von Nabenrissen ohnehin meist nicht vorhanden, da in diesen Flächen die spezifische Flächenpressung zwischen Bolzen und Nabe noch zu keiner Überbeanspruchung der Nabe führt. Daher ist dort schon die Nabenbohrungsvergrößerung allein als eine Maßnahme zur Nabenrißvermeidung anzusehen.

Von diesem Stand der Technik ausgehend liegt der Erfindung die Aufgabe zugrunde, eine wirksamere und konstruktiv einfachere Lösung zu finden.

Gelöst wird diese Aufgabe durch eine Ausführung der Nabenbohrung nach den kennzeichnenden Merkmalen des Anspruchs 1.

Die vorgeschlagene Lösung geht von der Überlegung aus, daß die die Nabenrisse im wesentlichen bewirkenden Zug-Umfangsspannungen durch den Druck des Schmieröles in dem Zenitbereich der Nabenbohrung mit erzeugt werden. Denn bei unter dem Druck der Verbrennungsgase stehendem Kolben wird der Zenitbereich der Nabenbohrung gegen den Kolbenbolzen gedrückt. Das zwischen Kolbenbolzen und Nabenbohrungswand dort beim Übergang zum Arbeitstakt vorhandene Spiel wird dabei unter Verdrängung des dort befindlichen Schmieröles abgebaut. Ist das bei großem Spiel vorhandene Ölpolster nun nicht in der Lage, ausreichend schnell aus dem Zenitbereich der Nabenbohrung, in dem das Lagerspiel abgebaut werden soll zu entweichen, baut sich in diesem Bereich in dem Schmieröl ein Druck auf. Dieser Druck wirkt bezüglich der Nabe aufweitend und erzeugt dadurch die zu den Nabenrissen im Nabvenbohrungszenit führenden Zug-Umfangsspannungen.

Durch die erfindungsgemäß vorgeschlagene im Zenitbereich druckentlastend wirkende Maßnahme lassen sich die gefährlichen Zug-Umfangsspannungen besonders wirksam vermeiden. Da die Nabenrisse häufig nur in dem zum Kolbeninneren liegenden Bereich der Nabenbohrungen entstehen, reicht es häufig aus, die erfindungsgemäße druckentlastende Maßnahme nur dort vorzusehen. Wichtig ist allerdings, daß die druckentlastende Maßnahlme in Bolzenrichtung auch tatsächlich über den gesamten rißgefährdeten Bereich verläuft. So hat es sich gezeigt, daß z. B. eine einzelne radial zur Kolbenbolzenachse durch den Nabenbohrungszenit verlaufende Bohrung, wie sie unter anderem aus der GB-PS 200 718 bekannt ist, nicht zur Vermeidung von Nabenrissen in dem gesamten rißgefährdeten Zenitbereich der Nabenbohrung ausreicht.

Ein Ausführungsbeispiel der Erfindung ist in der Zeichnung dargestellt. Es zeigen

Figur 1 einen Längsteilschnitt durch einen Kolben,

Figur 2 einen Schnitt nach Linie II-II.

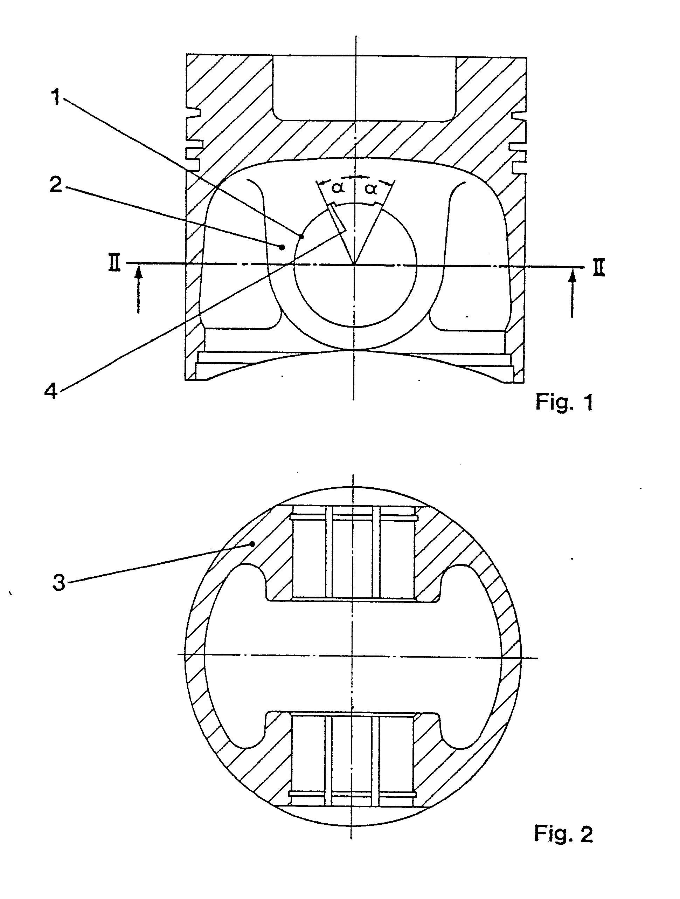

In die Nabenbohrungen 1 der Bolzennaben 2 des Kolbens 3 ist ein nicht dargestellter Kolbenbolzen eingesetzt. Als druckentlastende Maßnahme im Zenit der Nabenbohrung 1 sind zwei parallel zur Kolbenbolzenachse verlaufende Längsnuten 4 in einem Winkel von α = 30° zur Senkrechten vorgesehen. Der Durchmesser des aus Leichtmetall bestehenden Kolbens beträgt 125 mm. Der Durchmesser der Nabenbohrung 1 beträgt 46 mm. Die Nuten 4 haben eine Breite von 2 mm und eine Tiefe von 0,4 mm. Gegebenenfalls können zusätzlich zu den den Öldruck entlastenden Nuten 4 auch noch alle anderen im Stand der Technik bekannten Nabenriß vermindernden Maßnahmen getrennt oder untereinander kombiniert angewendet werden.

**Patentansprüche**

1. Kolbenbolzenlagerung in der Nabenbohrung eines Leichtmetallkolbens (3) mit mindestens einer im Bereich des Zenites der Nabenbohrung (1) in Richtung der Bolzenachse verlaufenden Ausnehmung (4) in einem umfangsmäßig in einem Winkel von maximal α = 30° beidseitig des Zenites liegenden Bereich dadurch gekennzeichnet, daß die gesamte Breite der Ausnehmungen (4) 1-10 % des Durchmessers der Nabenbohrung (1) beträgt, und daß die Ausnehmung oder die Ausnehmungen (4) über die gesamte Länge der Nabenbohrung (1) gleich bleibende Tiefe und Breite aufweisen.

2. Kolbenbolzenlagerung nach Anspruch 1, dadurch gekennzeichnet, daß nur eine Ausnehmung (4) vorgesehen ist, die mit einem Teil ihrer Breite direkt im Zenit der Nabenbohrung (1) liegt.

3. Nabenbohrung nach einem der vorhergehenden Ansprüche, dadurch gekennzeichnet, daß die Tiefe der Ausnehmungen (4) 0,5-2 % des Durchmessers der Nabenbohrung (1) beträgt.

**Claims**

1. Gudgeon pin mounting in the boss bore of a light metal piston (3) having, extending in the direction of the gudgeon pin axis and in the region of the zenith of the boss nore (1), an aperture (4) in a zone disposed peripherally at an angle of α = 30° max. on either side of the zenith, characterised in that the total width of the recesses (4) is 1 to 10 % of the diameter of the boss bore (1) and in that the recess or recesses (4) is or are of constant depth and width over the total length of the boss bore (1).

2. Gudgeon pin mounting according to Claim 1, characterised in that only one recess (4) is provided and has a part of its width disposed directly at the zenith of the boss bore (1).

3. Boss bore according to one of the preceding Claims, characterised in that the depth of the recesses (4) is 0.5 to 2 % of the diameter of the boss bore (1).

**Revendications**

1. Palier de logement d'un axe de piston dans un alésage formé dans un piston (3) en métal léger, comportant au voisinage du zénith de cet alésage (1) au moins un évidement (4) orienté dans le sens de cet axe de piston et formé dans une zone périphérique couvrant au maximum un angle α = 30° de chaque côté de ce zénith, palier caractérisé en ce que la largeur totale des évidements (4) est comprise entre 1 % et 10 % du diamètre de l'alésage (1) du palier et en ce que ce ou ces évidements (4) ont une profondeur et une largeur constantes sur toute la longueur de cet alésage (1).

2. Palier d'axe de piston selon la revendication 1, caractérisé en ce qu'il comporte un seul évidement (4), dont une partie de la largeur se trouve directement au zénith de l'alésage (1).

3. Palier d'axe de piston selon l'une des revendications précédentes, caractérisé en ce que la profondeur des évidements (4) est comprise entre 0,5 et 2 % du diamètre de l'alésage (1) de ce palier.

Fig. 1

Fig. 2